# EUROPEAN PATENT SPECIFICATION

(11) **EP 2 098 869 B1**
(45) Date of publication and mention of the grant of the patent: **20.07.2022**
(21) Application number: 09003330.9
(22) Date of filing: 06.03.2009
(51) Int. Cl.: G01N 35/00, G01N 35/02, G01N 35/04

(54) **Analyzer and sample transportation method for analyzer**
Analysegerät und Probentransportverfahren für das Analysegerät
Analyseur et procédé de transport d'échantillons pour analyseur

(30) Priority: 07.03.2008 JP 2008058007; 07.03.2008 JP 2008057382; 07.03.2008 JP 2008057972; 07.03.2008 JP 2008057661; 07.03.2008 JP 2008058302
(43) Date of publication of application: 09.09.2009
(73) Proprietor: Sysmex Corporation, Kobe-shi, Hyogo 651-0073 (JP)
(72) Inventor: Fukuma, Daigo, Kobe-shi Hyogo 651-0073 (JP); Hamada, Yuuichi, Kobe-shi Hyogo 651-0073 (JP); Ueno, Kunio, Kobe-shi Hyogo 651-0073 (JP); Shibata, Masaharu, Kobe-shi Hyogo 651-0073 (JP); Nagai, Takaaki, Kobe-shi Hyogo 651-0073 (JP)
(74) Representative: Hoffmann Eitle

(56) References cited:
- EP-A1- 1 248 170
- US-A- 5 623 415
- US-A- 6 019 945
- US-A1- 2002 015 665
- US-A1- 2005 186 113

## Description

### FIELD OF THE INVENTION

The present invention relates to an analyzer, and a sample transportation method for an analyzer, and more particularly, to an analyzer provided with a plurality of measurement units and a sample transportation method using a plurality of measurement units.

### BACKGROUND

Analyzers and transportation systems automatically transporting samples to a plurality of measurement units have been known. In addition, a transportation system capable of promptly performing of a process of samples has been known (see Japanese Patent Application Laid-Open No. 9-43248).

The transportation system described in Japanese Patent Application Laid-Open No. 9-43248 is provided with a start stock unit holding a plurality of racks housing a plurality of samples before processing, and is configured to select a predetermined rack from the start stock unit on the basis of information of measurement items for the samples and a load (burden) state of each measurement unit and to input the selected predetermined rack to a transportation line. With such a configuration, it is possible to efficiently transport the samples to each measurement unit, and thus it is possible to promptly process the samples.

However, in the transportation system described in Japanese Patent Application Laid-Open No. 9-43248, after the selected predetermined rack is input to the transportation line, for example, when an interruption cause of measurement occurs such as error or measurement instruction of a prior sample (urgent sample) in the measurement unit at a transportation destination, the process of the samples in the transported predetermined rack is interrupted. That is, in the transportation system described in Japanese Patent Application Laid-Open No. 9-43248, it is difficult to promptly cope with the occurrence of the interruption cause of the measurement in the measurement unit. As a result, there is a problem that the process of the sample cannot be promptly performed.

US 2005/186113 A1 relates to an analyzer capable of operating in a normal processing mode performing sequential analysis of a plurality of specimens and in an interrupting mode performing analysis of an urgent specimen that comprises a suction unit for suctioning an urgent specimen, an analysis unit for analyzing an urgent specimen suctioned by the suction unit, an urgent specimen container holder for holding an urgent specimen container containing an urgent specimen, and a moving mechanism for moving the urgent specimen container holder between a placement position at which an urgent specimen container is placed in the holder, and a suction position at which an urgent specimen is suctioned from an urgent specimen container, wherein the moving mechanism comprises a movement force supplying mechanism for supplying a force to move the urgent specimen container holder from the suction position to the placement position.

EP 1 248 170 A1 relates to a method for the management of Workcell System for controlling concurrent processes that use pieces of equipment, called Resources, interacting with each other by means of a continuous real-time re-scheduling of automatic tasks. Further, the document relates to an Automation Management System.

US 5 623 415 A relates to an automated apparatus for subjecting samples to one or more selected test procedures at one or more test stations comprising a conveyor line for transporting samples contained in uniquely labelled containers. The conveyor line has at least two lanes for routing the containers to one or more selectable test stations, at least one of said lanes being a transport lane and at least one of said lanes being a queue lane.

US 2002/0015665 A1 relates to a workstation for integrating two or more automated analyzers. The workstation includes a sample rack handler assembly, having a single common sample rack input area for loading sample racks for the two or more automated analyzers, and a sample rack bypass area for passing sample racks to be processed by one of the two or more automated analyzers. A single common control console is provided for the workstation and the two or more automated analyzers.

US 6 019 945 A relates to a sample analysis system provided with a plurality of analysis units which are disposed along a conveyor line for conveying holders which hold sample containers. A sample rack delivered by a main conveyor line is moved along a row of analysis units, stopped in front of a particular analysis unit designated by a control unit, and immediately transferred to a rack receive position on a sampling line of the designated analysis unit by its rack transfer mechanism (see also column 5, lines 34 - 40, of D5). If abnormality arises in an of the analysis units causing it to be unable to continue its analysis operation, the control unit instructs another analysis unit to take over its analysis assignment and its sample rack to be delivered thereto. By providing a plurality of reagents for use for a plurality of analysis items in duplicate in two analysis units, analysis operation for the plurality of analysis items can be ensured to be continued without interruption.

### SUMMARY OF THE INVENTION

The scope of the present invention is defined solely by the appended claims, and is not affected to any degree by the statements within this summary.

### BRIEF DESCRIPTION OF THE DRAWINGS

FIG. 1 is a perspective view illustrating an overall configuration of a blood analyzer according to an embodiment of the invention.
FIG. 2 is a perspective view for explaining detailed sections of the blood analyzer according to the embodiment shown in FIG. 1.
FIG. 3 is a schematic diagram illustrating a measurement unit and a sample transportation device of the blood analyzer according to the embodiment shown in FIG. 1.
FIG. 4 is a perspective view illustrating a measurement unit and a sample transportation device of the blood analyzer according to the embodiment shown in FIG. 1.
FIG. 5 is a perspective view illustrating a rack and sample containers of the blood analyzer according to the embodiment shown in FIG. 1.
FIG. 6 is a plan view for explaining the sample transportation device of the blood analyzer according to the embodiment shown in FIG. 1.
FIG. 7 is a side view for explaining the sample transportation device of the blood analyzer according to the embodiment shown in FIG. 1.
FIG. 8 is a side view for explaining the sample transportation device of the blood analyzer according to the embodiment shown in FIG. 1.
FIG. 9 is a block diagram for explaining a control device of the blood analyzer according to the embodiment shown in FIG. 1.
FIG. 10 is a diagram illustrating a prior sample measurement instruction screen of the blood analyzer according to the embodiment shown in FIG. 1.
FIG. 11 is a flowchart for explaining a measurement processing operation performed by a measurement processing program of the blood analyzer according to the embodiment shown in FIG. 1.
FIG. 12 is a state transition diagram for explaining state transition of a first measurement unit and a second measurement unit of the blood analyzer according to the embodiment shown in FIG. 1.
FIG. 13 is a state transition diagram for explaining state transition of a sample transportation device of the blood analyzer according to the embodiment shown in FIG. 1.
FIG. 14 is a flowchart for explaining a process of determining the next operation of the sample transportation device of the blood analyzer according to the embodiment shown in FIG. 1.
FIG. 15 is a diagram illustrating event notification of the blood analyzer according to the embodiment shown in FIG. 1.
FIG. 16 is a diagram illustrating priority of commands of the blood analyzer according to the embodiment shown in FIG. 1.
FIG. 17 is a flowchart for explaining an operation at the time of prior sample measurement of the blood analyzer according to the embodiment shown in FIG. 1.
FIG. 18 is a diagram for explaining a modified example of the blood analyzer according to the embodiment of the invention.

### DETAILED DESCRIPTION OF THE PREFERRED EMBODIMENTS

The preferred embodiments of the present invention will be described hereinafter with reference to the drawings.

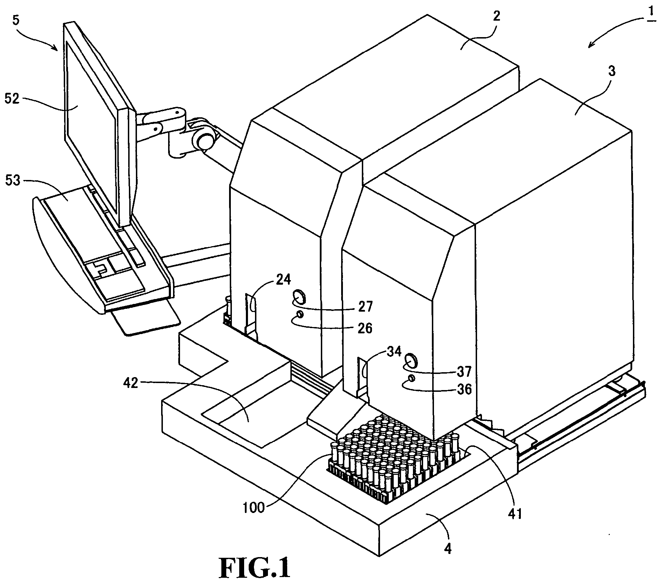

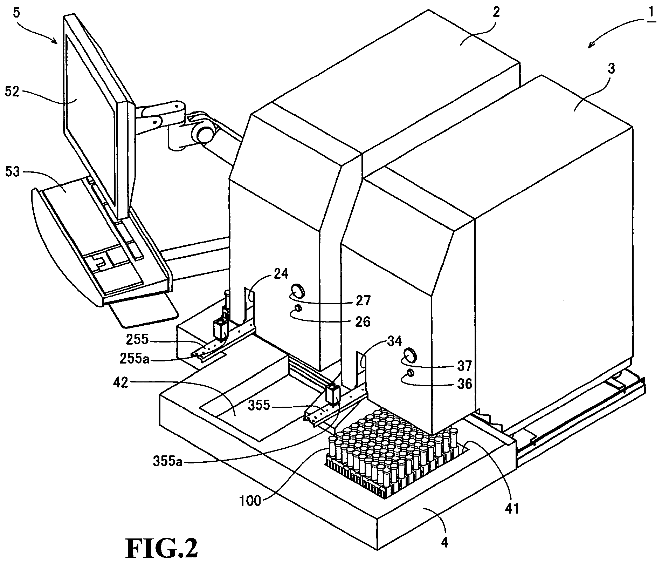

FIG. 1 is a perspective view illustrating an overall configuration of a blood analyzer according to an embodiment of the invention. FIG. 2 to FIG. 10 are views for explaining detailed sections of the blood analyzer according to an embodiment shown in FIG. 1. First, the overall configuration of the blood analyzer 1 according to the embodiment of the invention will be described with reference to FIG. 1 to FIG. 10. In the embodiment, the invention is applied to a blood analyzer that is an example of an analyzer.

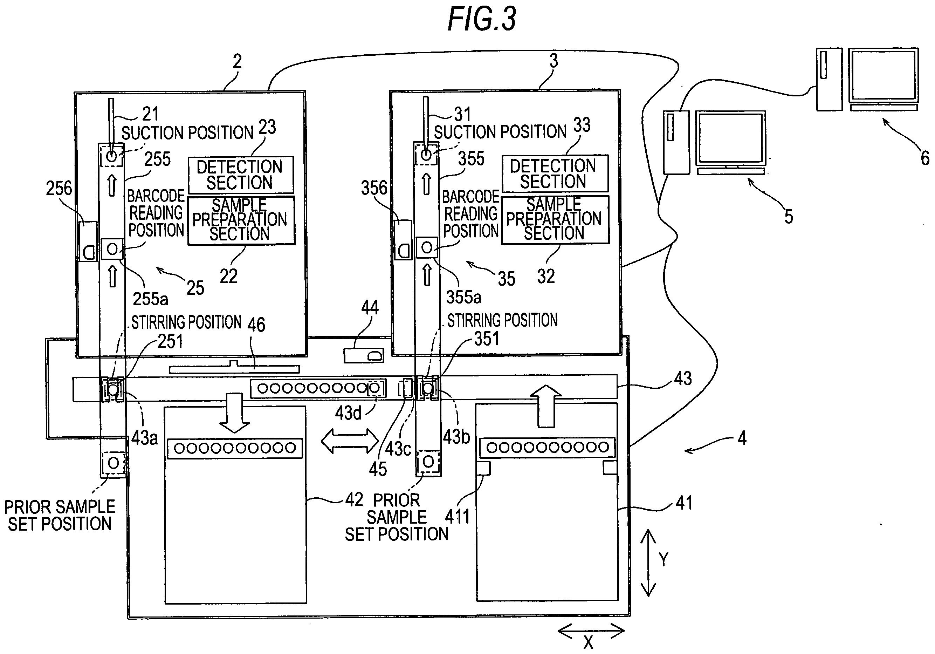

As shown in FIG. 1 and FIG. 2, the blood analyzer 1 according to an embodiment of the invention is provided with two measurement units of a first measurement unit 2 and a second measurement unit 3, a sample transportation device (sampler) 4 disposed on the front side of the first measurement unit 2 and the second measurement unit 3, and a control device 5 including a PC (personal computer) electrically connected to the first measurement unit 2, the second measurement unit 3, and the sample transportation device 4. The blood analyzer 1 is connected to a host computer 6 (see FIG. 3) by the control device 5.

The blood analyzer 1 is not a transportation system in which a plurality of analyzers are connected by the known transportation device but a standalone analyzer. In addition, the blood analyzer 1 may be mounted on the transportation system.

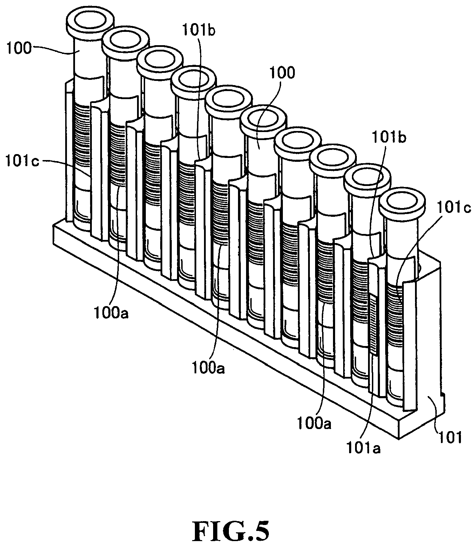

As shown in FIG. 1 to FIG. 4, the first measurement unit 2 and the second measurement unit 3 are substantially the same type of measurement units (In the embodiment, the second measurement unit 3 uses the same measurement principle as the first measurement unit 2, and measures samples with respect to the same measurement items. The second measurement unit 3 also measures measurement items which are not analyzed by the first measurement unit 2.), and are disposed adjacent to each other. Herein, the same type includes a case in which a plurality of measurement items of the first measurement unit 2 and a plurality of measurement items of the second measurement unit 3 are partially common, as well as a case in which two measurement units measure samples with respect to the completely same measurement items. As shown in FIG. 3, the first measurement unit 2 and the second measurement unit 3 include sample suction sections 21 and 31 for sucking blood as a sample from a sample container (test tube) 100, sample preparation sections 22 and 32 for preparing detection samples from the blood sucked by the sample suction sections 21 and 31, and detection sections 23 and 33 for detecting blood cells from the detection samples prepared by the sample preparation sections 22 and 32, respectively. The first measurement unit 2 and the second measurement unit 3 further include insertion holes 24 and 34 (see FIG. 1 and FIG. 2) for inserting a sample container 100 accommodated in a rack 101 (see FIG. 5) transported by the sample transportation device 4, and sample container transportation sections 25 and 35 for inserting the sample container 100 from the rack 101 therein and transporting the sample container 100 to a suction position (see FIG. 3) of the sample suction sections 21 and 31, respectively. As shown in FIG. 1 and FIG. 2, sample set section open and close buttons 26 and 36 and prior sample measurement start buttons 27 and 37 are provided on the outer surface of the first measurement unit 2 and the second measurement unit 3, respectively. As shown in FIG. 3, the first measurement unit 2 and the second measurement unit 3 are provided with state notification units 28 and 38 for transmitting state notifications to a control device 5, respectively.

Needles (not shown) are provided at the front end portions of the sample suction sections 21 and 31, respectively. The sample suction sections 21 and 31 are configured to move in the vertical direction (direction indicated by the arrow Z), respectively. The sample suction sections 21 and 31 are configured to pass through an airtight cap of the sample container 100 transported to the suction position by moving downward and to suck inner blood.

The detection sections 23 and 33 are configured to perform RBC detection (detection of red blood cell) and PLT detection (detection of platelet) by a sheath flow DC detection method and to perform HGB detection (detection of hemoglobin in blood) by an SLS-hemoglobin method. The detection sections 23 and 33 are configured to perform WBC detection (detection of white blood cell) by a flow cytometry method using semiconductor laser.

The detection result obtained by the detection sections 23 and 33 are transmitted to the control device 5, as measurement data (measurement result) of samples. The measurement data is a basis of a final analysis result (the number of red blood cells, the number of platelets, the amount of hemoglobin, the number of white blood cells, etc.) provided for a user.

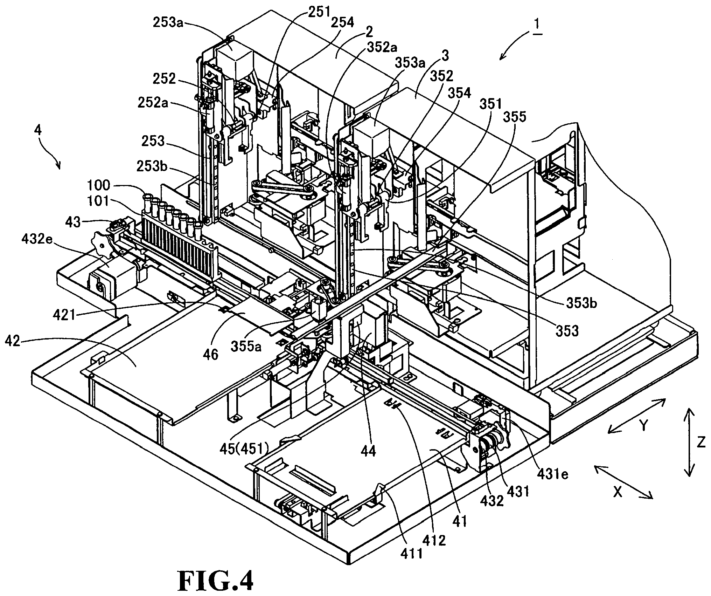

As shown in FIG. 3 and FIG. 4, the sample container transportation sections 25 and 35 has hand sections 251 and 351 for gripping the sample container 100, opening and closing sections 252 and 352 for opening and closing the hand sections 251 and 351 to grip the sample container 100, vertical moving sections 253 and 353 for straightly moving the hand sections 251 and 351 in the vertical direction (direction indicated by the arrow Z), and stirring sections 254 and 354 for moving the hand sections 251 and 351 in a pendulum shape in the vertical direction (direction indicated by the arrow Z), respectively. The sample container transportation sections 25 and 35 further have sample container moving sections 255 (see FIG. 3) and 355 for holding the sample container 100 acquired from the rack 101 by the hand sections 251 and 351 to sample set sections 255a (see FIG. 3) and 355a, and for horizontally and straightly moving in the direction indicated by the arrow Y to the suction position of the sample suction sections 21 and 31, and barcode reading sections 256 and 356, respectively.

The hand sections 251 and 351 are disposed above a transportation path of the rack 101 transported by the sample transportation device 4, respectively. The hand sections 251 and 351 are configured so that when the sample container 100 is transported to a first providing position 43a for providing samples at the first measurement unit 2 and a second providing position 43b (see FIG. 3) for providing samples at the second measurement unit 3, the hand sections 251 and 351 move downward (direction indicated by the arrow Z) to grip the sample container 100 accommodated in the rack 101 by opening and closing the opening and closing sections 252 and 352, respectively. The hand sections 251 and 351 are configured to move the gripped sample container 100 upward to be extracted from the rack 101, and then to move in a pendulum shape by the stirring sections 254 and 354 (e.g. , 10 times reciprocation), respectively. Accordingly, it is possible to stir blood in the gripped sample container 100 by the hand sections 251 and 351. After completion of stirring, the hand sections 251 and 351 are configured to move downward and then open the gripping of the sample container 100 by the opening and closing sections 252 and 352. Accordingly, it is possible to set the sample container 100 at the sample set sections 255a and 355a of the sample container moving sections 255 and 355 by the hand sections 251 and 351.

The opening and closing sections 252 and 352 are configured to open and close the hand sections 251 and 351 to grip the sample container 100 by power of air cylinders 252a and 352a, respectively.

The vertical moving sections 253 and 353 are configured to move the hand sections 251 and 351 in the vertical direction (direction indicated by the arrow Z) along rails 253b and 353b by power of stepping motors 253a and 353a, respectively.

The stirring sections 254 and 354 are configured to move the hand sections 251 and 351 in a pendulum shape in the vertical direction (direction indicated by the arrow Z) by power of stepping motors (not shown), respectively.

The sample container moving sections 255 and 355 are configured to horizontally move the sample set sections 255a and 355a in the direction indicated by the arrow Y by power of stepping motors (not shown), respectively. Accordingly, as shown in FIG. 3, the sample container moving sections 255 and 355 can transport the sample container 100 set at the sample set sections 255a and 355a to a prior sample set position, a stirring position, a barcode reading position, and a suction position. The sample container moving sections 255 and 355 are configured to pass through the upside of the transportation path of the rack 101 and transport the sample container 100, so as to intersect the transportation path of the rack 101 transported in the direction indicated by the arrow X in the plan view. The sample set sections 255a and 355a are configured to move to a prior sample set position (see FIG. 3) when a user presses down the sample set section open and close buttons 26 and 36 (see FIG. 1 and FIG. 2). The sample container moving sections 255 and 355 are configured to clamp (fix) the sample container 100 at each suction position by a restriction section (not shown).

The barcode reading sections 256 and 356 are configured to read a barcode 100a attached to each sample container 100 as shown in FIG. 5. The barcode reading sections 256 and 356 are configured to read the barcode 100a of the sample container 100 while rotating in the horizontal direction with the sample container 100 as a target held to the sample set sections 255a and 355a by a rotation device (not shown). Accordingly, even when the barcode 100a of the sample container 100 is attached to the opposite side to the barcode reading sections 256 and 356, it is possible to turn the barcode 100a toward the barcode reading sections 256 and 356 by rotating the sample container 100 . Each barcode 100a of each sample container 100 is uniquely attached to each sample, and is used to manage the analysis result of each sample.

The sample set section open and close buttons 26 and 36 are configured to be pressed down by a user at the time of measuring a prior sample.

The prior sample measurement start buttons 27 and 37 are configured to be pressed down by a user. When the user sets a prior sample at the sample set sections 255a and 355a and then presses down the prior sample measurement start buttons 27 and 37, the sample set sections 255a and 355a at which the prior sample is set are inserted into the measurement unit and the measurement is started.

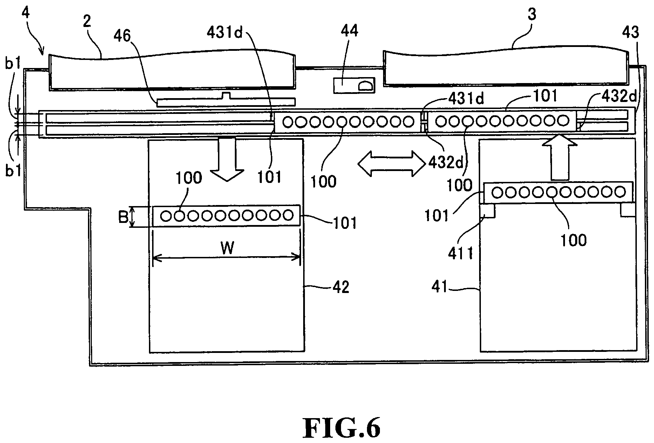

As shown in FIG. 4 and FIG. 6, the sample transportation device 4 includes a before-analysis rack holding section 41 capable of holding the plurality of racks 101 accommodating the sample containers 100 for accommodating samples before performing analysis, an after-analysis rack holding section 42 capable of holding the plurality of racks 101 accommodating the sample containers 100 for accommodating the samples after performing analysis, a rack transportation section 43 for horizontally and straightly moving the rack 101 in the direction indicated by the arrow X, a barcode reading section 44, a presence sensing sensor 45 (see FIG. 4) for sensing whether or not there is the sample container 100, and a rack output section 46 for moving the rack 101 into the after-analysis rack holding section 42.

The before-analysis rack holding section 41 having a rack input section 411 is configured to output the rack 101 held to the before-analysis rack holding section 41 one by one onto the rack transportation section 43 by moving the rack input section 411 in the direction indicated by the arrow Y. The rack input section 411 is configured to be driven by a stepping motor (not shown) provided below the before-analysis rack holding section 41. The before-analysis rack holding section 41 having a restriction section 412 (seeFIG. 4) in the vicinity of the rack transportation section 43 is configured to restrict movement of the rack 101 so that the rack 101 output onto the rack transportation section 43 once does not return into the before-analysis rack holding section 41.

The after-analysis rack holding section 42 having a restriction section 421 (FIG. 4) in the vicinity of the rack transportation section 43 is configured to restrict movement of the rack 101 so that the rack 101 moved into the after-analysis rack holding section 42 once does not return to the rack transportation section 43.

In the embodiment, as shown in FIG. 3, the rack transportation section 43 is configured to transport the rack 101 so that the samples are transported to the first providing position 43a for providing samples at the first measurement units 2 and the second providing position 43b for providing samples at the second measurement unit 3. When the samples are transported to the providing position 43a or 43b, the hand section 251 or 351 of the corresponding measurement unit grips the sample container 100 of the transported samples. The rack transportation section 43 is configured to wait until finishing the operation of extracting the sample container 100 from the rack 101. Accordingly, the sample container 100 is taken out of the rack 101 by the hand section 251 or 351 in a state where the sample container 100 accommodating the samples remains stationary at the sample providing position 43a or 43b. Therefore, it is possible to securely take the sample container 100 out of the rack 101 by the hand section 251 or 351. The rack transportation section 43 is configured to transport the rack 101 so as to transport the samples to a sample presence check position 43c for checking whether or not there is the sample container 100 for accommodating the samples by the presence sensing sensor 45 and a reading position 43d for reading the barcode 100a of the sample container 100 for accommodating the samples by the barcode reading section 44.

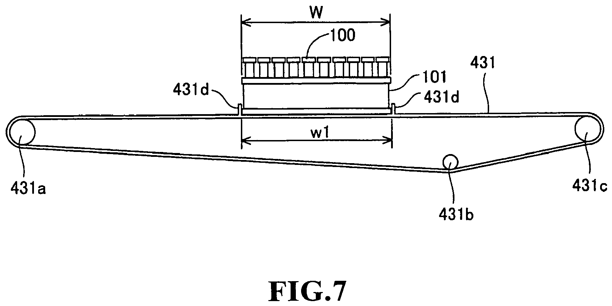

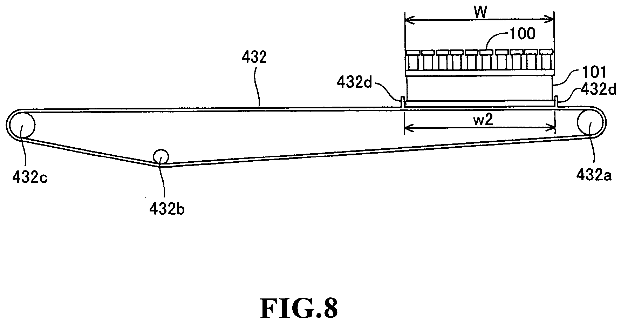

The rack transportation section 43 has two belts of a first belt 431 and a second belt 432 capable of moving independently from each other. Widths b1 and b2 (see FIG. 6) of the first belt 431 and the second belt 432 in the direction indicated by the arrow Y are a half of a width B of the rack 101 in the direction indicated by the arrow Y or smaller. Accordingly, the first belt 431 and the second belt 432 are disposed in parallel so as not to protrude from the width B of the rack 101 when the rack transportation section 43 transports the rack 101. As shown in FIG. 7 and FIG. 8, the first belt 431 and the second belt 432 have a ring shape, and are disposed to surround rollers 431a to 431c and rollers 432a to 432c, respectively. Each two protrusion pieces 431d and 432d are formed at outer peripheral sections of the first belt 431 and the second belt 432 to have an inner width w1 (see FIG. 7) and w2 (see FIG. 8) slightly (e.g., about 1 mm) larger than the width W of the rack 101 in the direction indicated by the arrow X. The first belt 431 is configured to move the rack 101 in the direction indicated by the arrow X by moving along outer peripheries of the rollers 431a to 431c by a stepping motor 431e (see FIG. 4), with the rack 101 held in the protrusion piece 431d. The second belt 432 is configured to move the rack 101 in the direction indicated by the arrow X by moving along outer peripheries of the rollers 432a to 432c by a stepping motor 432e (see FIG. 4), with the rack 101 held in the protrusion piece 432d. The first belt 431 and the second belt 432 are configured to move the rack 101 independently from each other.

The barcode reading section 44 is configured to read the barcode 100a of the sample container 100 shown in FIG. 5 and to read the barcode 101a attached to the rack 101. The barcode reading section 44 is configured to read the barcode 100a of the sample container 100 while rotating in the horizontal direction with the sample container 100 as a target accommodated in the rack 101 by a rotation device (not shown) . Accordingly, even when the barcode 100a of the sample container 100 is attached to the opposite side to the barcode reading section 44, it is possible to turn the barcode 100a toward the barcode reading section 44 by rotating the sample container 100. The barcode 101a of the rack 101 is uniquely attached to each rack, and is used to manage the analysis result of each sample.

The presence sensing sensor 45 is a contact type sensor, and has a contact piece 451 (see FIG. 4) having a curtain shape, a light emitting element (not shown) emitting light, and a light receiving element (not shown). The presence sensing sensor 45 is configured so that the contact piece 451 is bent when the contact piece 451 comes into contact with a sensing object that is a sensing target, and thus light emitted from the light emitting element is reflected to the contact piece 451, and the reflected light enters the light receiving element. Accordingly, when the sample container 100 that is a sensing target accommodated in the rack 101 passes through the downside of the presence sensing sensor 45, the contact piece 451 is bent by the sample container 100, thereby sensing that there is the sample container 100.

The rack output section 46 is opposed to the after-analysis rack holding section 42 with the rack transportation section 43 interposed therebetween, and is configured to horizontally and straightly move in the direction indicated by the arrow Y. Accordingly, when the rack 101 is transported to a position (hereinafter, referred to as a rack output position) between the after-analysis rack holding section 42 and the rack output section 46, the rack output section 46 is moved to the after-analysis rack holding section 42, thereby pressing the rack 101. Therefore, it is possible for the rack 101 to move into the after-analysis rack holding section 42.

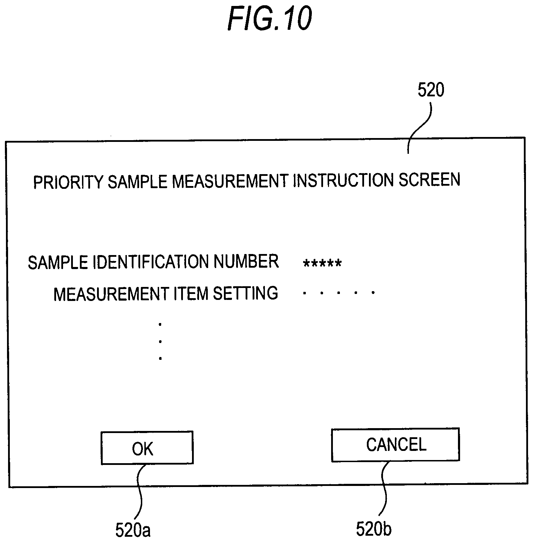

As shown in FIG. 1, FIG. 2, and FIG. 9, the control device 5 is configured of a personal computer (PC) or the like, and includes a control unit 51 configured of a CPU, a ROM, a RAM, and the like, a display unit 52, and an input device 53. The display unit 52 is provided to display analysis results and the like obtained by analyzing data of digital signals transmitted from the first measurement unit 2 and the second measurement unit 3. The display unit 52 is configured to input sample identification numbers for identifying samples by a user or to display a prior sample measurement instruction screen 520 (see FIG. 10) for setting measurement items and the like, in the measurement of a prior sample needing to be measured prior to the other samples.

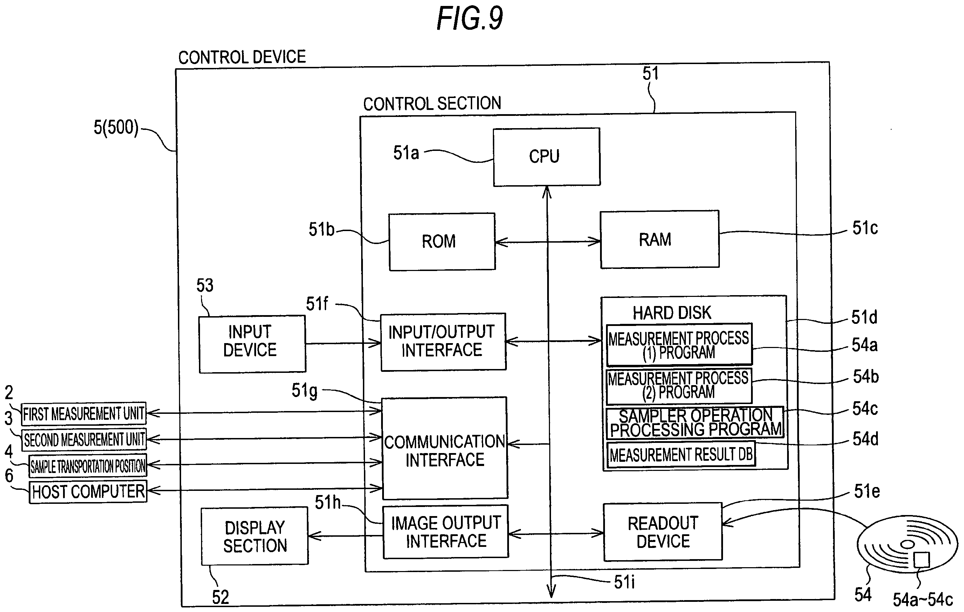

Next, a configuration of the control device 5 will be described. As shown in FIG. 9, the control device 5 is configured of a computer 500 mainly including a control unit 51, a display unit 52, and an input device 53. The control unit 51 mainly includes a CPU 51a, a ROM 51b, a RAM 51c, a hard disk 51d, a readout device 51e, an input/output interface 51f, a communication interface 51g, and an image output interface 51h. The CPU 51a, the ROM 51b, the RAM 51c, the hard disk 51d, the readout device 51e, the input/output interface 51f, the communication interface 51g, and the image output interface 51h are connected by a bus 51i.

The CPU 51a can execute a computer program stored in the ROM 51b and a computer program loaded on the RAM 51c. The CPU 51a executes application programs 54a to 54c, whereby the computer 500 functions as the control device 5.

The ROM 51b is configured of a mask ROM, a PROM, an EPROM, an EEPROM, or the like, in which computer programs executed by the CPU 51a and data used for the computer programs are recorded.

The RAM 51c is configured of an SRAM, a DRAM, or the like. The RAM 51c is used to read the computer programs recorded in the ROM 51b and the hard disk 51d. The RAM 51c is used as a work area of the CPU 51a when the computer programs are executed.

In the hard disk 51d, various computer programs such as an operating system and application programs executed by the CPU 51a, and data used for executing the computer programs are installed. A measurement processing program 54a for the first measurement unit 2, a measurement processing program 54b for the second measurement unit 3, and a measurement processing program 54c for the sample transportation device 4 are also installed in the hard disk 51d. The application programs 54a to 54c are executed by the CPU 51a, thereby controlling an operation of each section of the first measurement unit 2, the second measurement unit 3, and the sample transportation device 4. A measurement result database 54d is also installed therein.

The readout device 51e is configured of a flexible disk drive, a CD-ROM drive, a DVD-ROM drive, or the like, and can read computer programs or data recorded in a transportable recording medium 54. The application programs 54a to 54c are stored in the transportable recording medium 54, the computer 500 reads the application programs 54a to 54c from the transportable recording medium 54, and the application programs 54a to 54c can be installed in the hard disk 51d.

The application programs 54a to 54c are not only provided by the transportable recording medium 54 but may be provided from an external device connected to communicate with the computer 500 by an electric communication line (irrespective of wire and wireless) through the electric communication line. For example, the application programs 54a to 54c are stored in a hard disk of a server computer on the Internet, the computer 500 accesses to the server computer, the application programs 54a to 54c are downloaded, and the application programs 54a to 54c are installed in the hard disk 51d.

An operating system providing graphical user interface environment such as Windows (trade mark) produced by Microsoft Inc. in USA is installed in the hard disk 51d. In the following description, it is assumed that the application programs 54a to 54c are operated on the operating system.

The input/output interface 51f is configured of, for example, a serial interface such as USB, IEEE1394, and RS-232C, a parallel interface such as SCSI, IDE, and IEEE1284, an analog interface including a D/A converter and A/D converter, and the like. The input device 53 is connected to the input/output interface 51f, and a user uses the input device 53, thereby inputting data to the computer 500.

The communication interface 51g is, for example, an Ethernet (trade mark) interface. The computer 500 can transmit and receive data among the first measurement unit 2, the second measurement unit 3, the sample transportation device 4, and the host computer 6 using a predetermined communication protocol by the communication interface 51g.

The image output interface 51h is connected to the display unit 52 configured of LCD, CRT, or the like, and displays video signals based on the image data given from the CPU 51a on the display unit 52. The display unit 52 displays images (screen) according to the input video signals.

With such a configuration, the control unit 51 is configured to analyze components of an analysis target using the measurement result transmitted from the first measurement unit 2 and the second measurement unit 3, and to acquire the analysis result (the number of red blood cells, the number of platelets, the amount of hemoglobin, the number of white blood cells, etc.).

As shown in FIG. 5, ten container accommodating sections 101b are formed in the rack 101 to accommodate ten sample containers 100 in series. The container accommodating sections 101b are provided with opening sections 101c so that the barcode 100a of each accommodated sample container 100 is visible.

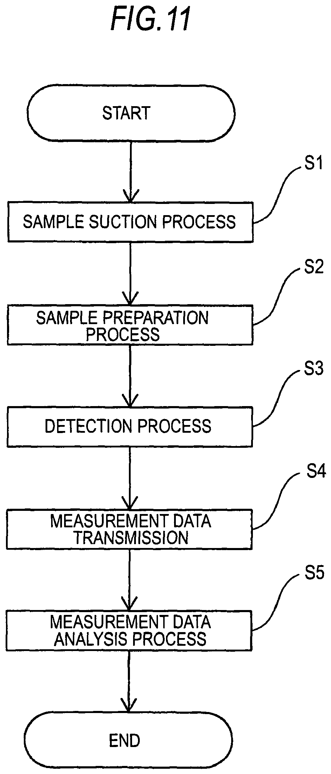

FIG. 11 is a flowchart for explaining measurement processing operations by the measurement processing programs of the blood analyzer according to the embodiment shown in FIG. 1. Next, the measurement processing operations by the measurement processing programs 54a and 54b of the blood analyzer 1 according to the embodiment will be described with reference to FIG. 11. The components of the analysis target are measured in the first measurement unit 2 and the second measurement unit 3 in the same manner. Accordingly, the case where the components of the analysis target are measured by the first measurement unit 2 will be described herein as a representative example.

First, in Step S1, suction of samples is performed from the transported sample container 100 to the suction position (see FIG. 3) by the sample suction section 21. In Step S2, a detection sample is prepared from the sucked sample by the sample preparation section 22. In Step S3, components of the analysis target are detected from the detection sample by the detection section 23. In Step S4, measurement data is transmitted from the first measurement unit 2 to the control device 5. Then, in Step S5, the components of the analysis target are analyzed by the control unit 51 on the basis of the measurement result transmitted from the first measurement unit 2. The analysis of the sample is completed by Step S5, and the operation is completed.

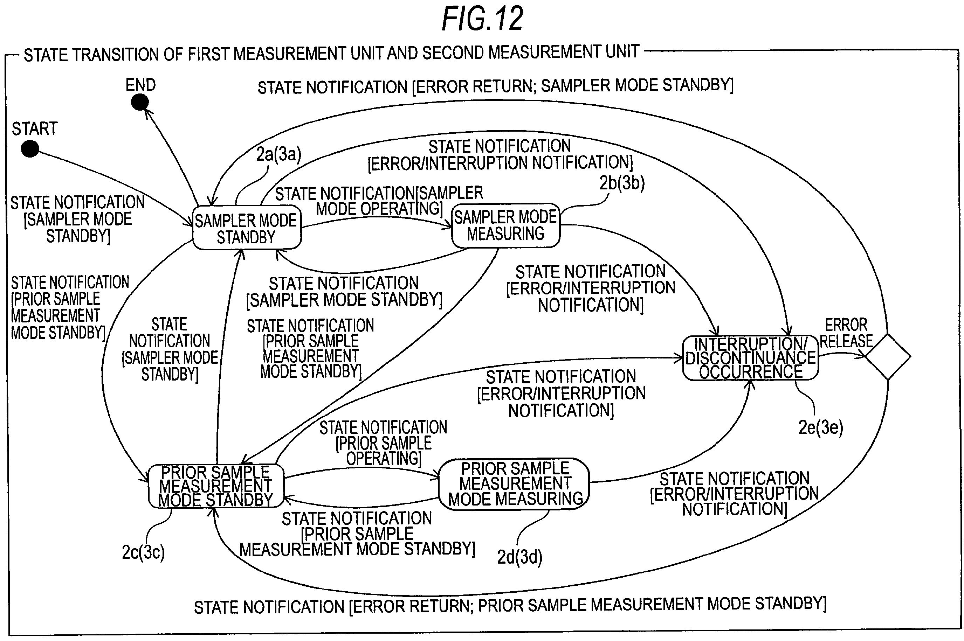

FIG. 12 is a state transition diagram for explaining state transition of the first measurement unit and the second measurement unit of the blood analyzer according to the embodiment shown in FIG. 1. Next, the state transition of the first measurement unit 2 and the second measurement unit 3 of the blood analyzer 1 according to the embodiment will be described with reference to FIG. 12. In the first measurement unit 2 and the second measurement unit 3, each state transition is the same. Accordingly, hereinafter, the state transition of the first measurement unit 2 will be described as a representative example.

The state of the first measurement unit 2 is transited from a non-operating state (start) to a sampler mode standby state 2a by powering on. In the sampler mode standby state 2a, when sampler measurement start is instructed by a user, the first measurement unit 2 is transited to a sampler mode measuring state 2b. In the sampler mode measuring state 2b, the measurement processing operations shown in FIG. 11 are performed by the first measurement unit 2. In the sampler mode measuring state 2b, when the measurement of the sample is completed, the first measurement unit 2 is returned to the sampler mode standby state 2a. In the sampler mode standby state 2a, when the power is turned off, the first measurement unit 2 is transited to the non-operating state (end).

When the sample set section open and close button 26 is pressed down by a user in the sampler mode standby state 2a and the sampler mode measuring state 2b, the first measurement unit 2 is transited to a prior sample measurement mode standby state 2c. When the first measurement unit 2 is transited to the prior sample measurement mode standby state 2c, the transportation of the sample to the first measurement unit 2 is reserved. That is, in this case, the sample transportation device 4 does not transport the samples to the providing position 43a of the first measurement unit 2, but transports the samples only to the providing position 43b of the second measurement unit 3. When both of the first measurement unit 2 and the second measurement unit 3 are transited to the prior sample measurement mode standby state 2c, the transportation of the samples are reserved to both of the providing positions 43a and 43b.

In the prior sample measurement mode standby state 2c, when the prior sample measurement start button 27 is pressed down, the first measurement unit 2 is transited to the prior sample measurement mode measuring state 2d. When the measurement of the prior sample is completed, the first measurement unit 2 is returned to the prior sample measurement mode standby state 2c. When the measurement of all prior samples are completed, the first measurement unit 2 is transited to the sampler mode standby state 2a by pressing down the sample set section open and close button 26 by a user.

In each state of the sampler mode standby state 2a, the sampler mode measuring state 2b, the prior sample measurement mode standby state 2c, and the prior sample measurement mode measuring state 2d, when an error occurs, the first measurement unit 2 is transited to an interruption/discontinuance occurrence state 2e. When the error is removed, the first measurement unit 2 is returned to the mode standby state of each state. Specifically, when the error occurring in the sampler mode standby state 2a and the sampler mode measuring state 2b is removed, the first measurement unit 2 is returned to the sampler mode standby state 2a. When the error occurring in the prior sample measurement mode standby state 2c and the prior sample measurement mode measuring state 2d is removed, the first measurement unit 2 is returned to the prior sample measurement mode standby state 2c.

When the state of the first measurement unit 2 is transited, a state notification for notifying that the first measurement unit 2 is transited to any state is transmitted from the first measurement unit 2 to the control device 5. Specifically, when the first measurement unit 2 is transited from the sampler mode measuring state 2b, the prior sample measurement mode standby state 2c, and the interruption/discontinuance occurrence state 2e to the sampler mode standby state 2a, a state notification for notifying that the first measurement unit 2 is transited to the sampler mode standby state 2a is transmitted from the first measurement unit 2 to the control device 5. When the first measurement unit 2 is transited to the sampler mode measuring state 2b, the prior sample measurement mode standby state 2c, the prior sample measurement mode measuring state 2d, and the interruption/discontinuance occurrence state 2e, the state notification is transmitted to the control device 5 similarly with the case of the transition to the sampler mode standby state 2a. In addition, when the first measurement unit 2 is returned from the interruption/discontinuance occurrence state 2e to each state, a state notification for notifying that the first measurement unit 2 is transited to any state is transmitted from the first measurement unit 2 to the control device 5, and a notification for notifying that the error is removed is notified together.

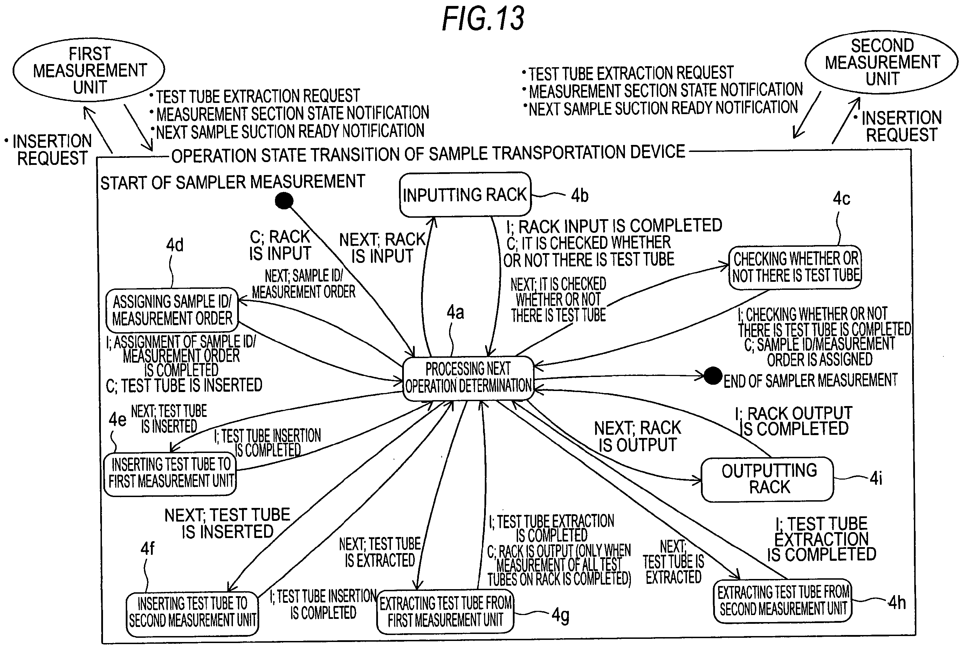

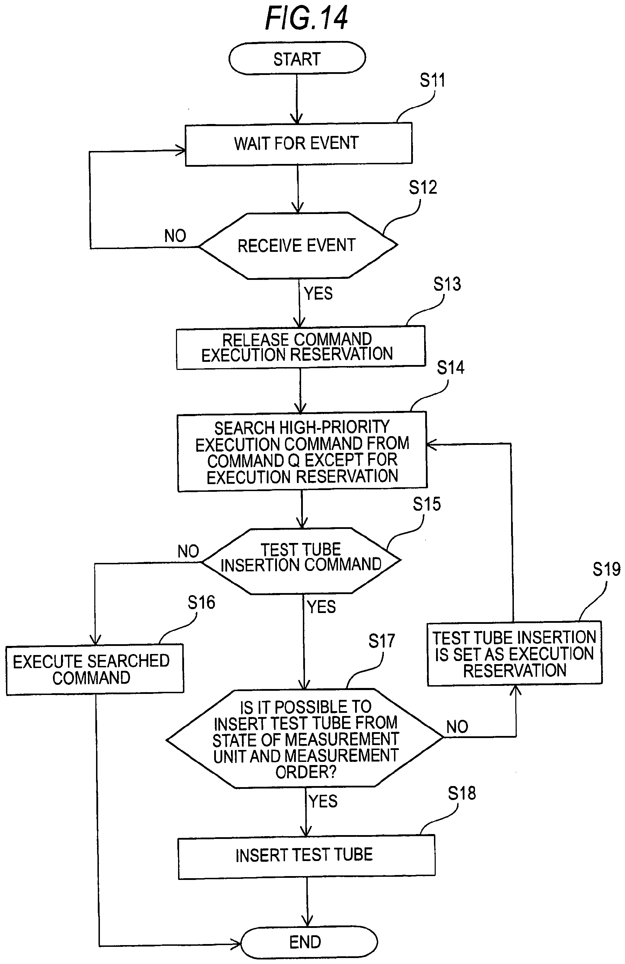

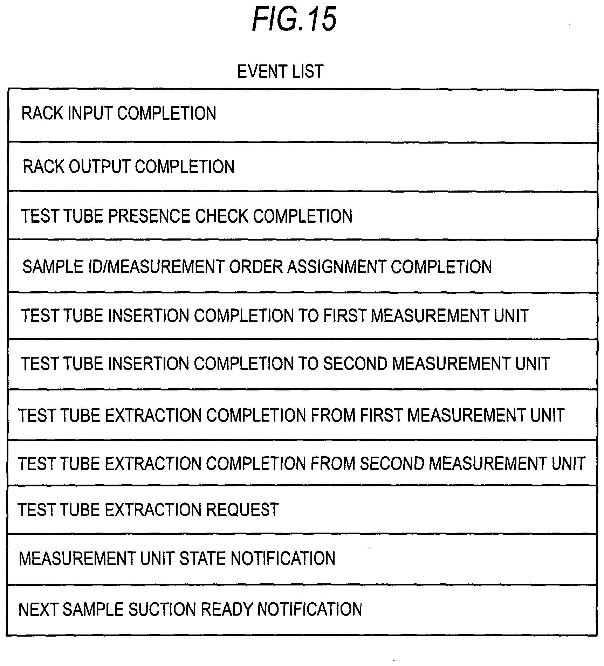

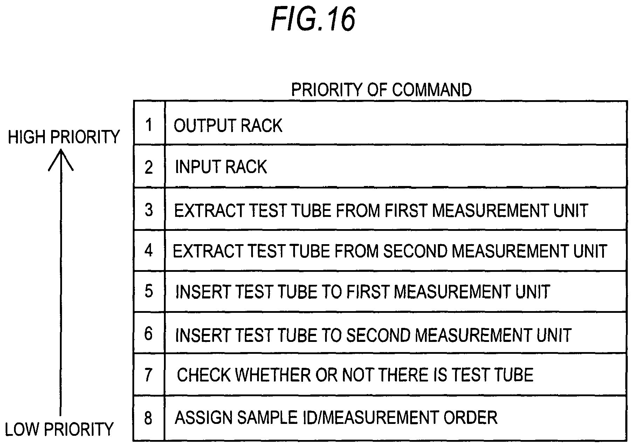

FIG. 13 is a state transition diagram for explaining state transition of the sample transportation device of the blood analyzer according to the embodiment shown in FIG. 1. FIG. 14 is a flowchart for explaining a process of determining the next operation of the sample transportation device of the blood analyzer according to the embodiment shown in FIG. 1. FIG. 15 and FIG. 16 are diagrams for explaining a detailed configuration of the blood analyzer according to the embodiment shown in FIG. 1. First, the state transition of the sample transportation device 4 of the blood analyzer 1 according to the embodiment will be described with reference to FIG. 13.

When a user instructs sampler measurement start, the state of the sample transportation device 4 becomes a next operation determination processing state 4a. This state is a waiting state for the sample transportation device 4 to execute operations registered in a queue for registering commands. In the embodiment, the queue is a data structure in which operation instructions to the sample transportation device 4 are registered, and the sample transportation device 4 is controlled by the CPU 51a of the control device 5 to execute the operations registered in the queue. The queue is stored in the RAM 51c or the hard disk 51d of the control device 5.

The process of determining the next operation performed by the sample transportation device 4 when the sample transportation device 4 of the blood analyzer 1 according to the embodiment is in the next operation determination processing state 4a will be described with reference to FIG. 14 to FIG. 16.

In Step S11 shown in FIG. 14, a notification of an event is waited by the CPU 51a. The notification of the event is notifications of 11 kinds of events shown in FIG. 15, and includes a notification for notifying that a predetermined operation is completed, a state notification for notifying a state of the measurement unit, and the like. Specifically, when the rack 101 is input from the before-analysis rack holding section 41 of the sample transportation device 4 onto the rack transportation section 43, a rack input completion notification is transmitted from the sample transportation device 4 to the control device 5. When the rack 101 on the rack transportation section 43 is output to the after-analysis rack holding section 42 by the rack output section 46, a rack output completion notification is transmitted from the sample transportation device 4 to the control device 5. When it is sensed whether or not there is the sample container 100 by the presence sensing sensor 45 of the sample transportation device 4, a test tube presence check completion notification is transmitted. When the barcode 100a of the sample container 100 is read by the barcode reading section 44 and a measurement order is assigned, a sample ID/measurement order assignment completion notification is transmitted.

A test tube insertion completion notification to first measurement unit, a test tube insertion completion notification to second measurement unit, a test tube extraction completion notification from first measurement unit, and a test tube extraction completion notification from second measurement unit are transmitted from the first measurement unit 2 and the second measurement unit 3 to the control device 5, when each operation in the first measurement unit 2 and the second measurement unit 3 is completed. In addition to state notifications of the first measurement unit 2 and the second measurement unit 3, a test tube extraction request notification for notifying that the sample container 100 is ready to be extracted from the first measurement unit 2 and the second measurement unit 3 and a next sample suction ready notification for notifying that a next new sample is ready to be sucked are transmitted from the first measurement unit 2 and the second measurement unit 3 to the control device 5.

In Step S12, it is determined whether or not any one of event notifications of the 11 kinds of event notifications is received by the CPU 51a, and the event notification waiting state continues until any one of event notifications is received. When any one of event notifications is received, the execution reservation of the operation set in the reservation state not to be performed among the operations registered in the queue is released by the CPU 51a, in Step S13.

The execution reservation will be described hereinafter. In the embodiment, as shown in FIG. 16, the operations registered in the queue are provided with priorities, and a high-priority operation is selected from the operations registered in the queue at the time of performing the operation by the CPU 51a. The sample transportation device 4 is controlled to perform the selected operation by the CPU 51a. However, there may be a case where two operations of "test tube insertion to first measurement unit" and "test tube insertion to second measurement unit" cannot be instantly performed, for example, a case where there is the other sample, which is being measured, in the first measurement unit 2 and the second measurement unit 3, and the next new sample cannot be inserted. In such a case, the execution of the operations of "test tube insertion to first measurement unit" and "test tube insertion to second measurement unit" is set as a reservation state by the CPU 51a, so that the operations of "test tube insertion to first measurement unit" and "test tube insertion to second measurement unit" are skipped and a subsequent high-priority operation is first performed. Accordingly, in the blood analyzer 1 according to the embodiment, even when the operations of "test tube insertion to first measurement unit" and "test tube insertion to second measurement unit" cannot be performed, the other operation than "test tube insertion to first measurement unit" and "test tube insertion to second measurement unit" is first performed. Therefore, it is possible to promptly perform the process of the samples.

In Step S14, the highest-priority operation is searched from the operations registered in the queue in the present state by the CPU 51a. In Step S15, it is determined whether the searched highest-priority operation is any one of "test tube insertion to first measurement unit" or "test tube insertion to second measurement unit". When the operation is not any one of "test tube insertion to first measurement unit" and "test tube insertion to second measurement unit", the searched highest-priority operation is performed in Step S16. At this time, when the rack output operation is performed, the rack output section 46 is controlled to output the rack 101 on the rack transportation section 43 to the after-analysis rack holding section 42 by the CPU 51a. When the rack input operation is performed, the rack input section 411 is controlled to input the rack 101 of the before-analysis rack holding section 41 onto the rack transportation section 43 by the CPU 51a. When the test tube extraction operation from the first measurement unit or the test tube extraction operation from the second measurement unit is performed, the rack transportation section 43 is controlled to transport the rack 101 by the CPU 51a, so that the container accommodating section 101b of the extracted sample container 100 corresponds to any one of the providing position 43a of the first measurement unit 2 or the providing position 43b of the second measurement unit 3. When the test tube presence check operation is performed, the rack transportation section 43 is controlled to transport the rack 101 by the CPU 51a, so that the unchecked sample container 100 accommodated in the rack 101 reaches the sample presence check position 43c. When the sample ID/measurement order assignment operation is performed, the rack transportation section 43 is controlled to transport the rack 101, so that the sample container 100 accommodated in the rack 101 and to which a measurement order is not yet assigned reaches the reading position 43d. Then, the operation is completed.

On the other hand, when the operation is any one operation of "test tube insertion to first measurement unit" or "test tube insertion to second measurement unit", it is determined whether or not the corresponding operation of "test tube insertion to first measurement unit" or "test tube insertion to second measurement unit" can be performed by the CPU 51a on the basis of the measurement order and the state of the first measurement unit 2 and the second measurement unit 3 in Step S17.

In the embodiment, the CPU 51a determines whether or not the measurement unit corresponding to the first measurement unit 2 or the second measurement unit 3 is in a state capable of inserting the test tube, on the basis of the state notifications transmitted from the measurement units, the test tube extraction request notification, and the next sample suction ready notification. Specifically, when the state notification indicating the prior sample measurement mode standby state 2c, the prior sample measurement mode measuring state 2d, or the interruption/discontinuance occurrence state 2e is transmitted from the first measurement unit 2, the CPU 51a determines that the test tube cannot be inserted to the first measurement unit 2. When the next sample suction ready notification is not transmitted from the first measurement unit 2, the CPU 51a determines that the first measurement unit 2 is not in the state capable of inserting the test tube. Determination for the second measurement unit 3 is performed in the same manner as the case of the first measurement unit 2. In the case capable of inserting the test tube, the corresponding operation of "test tube insertion to first measurement unit" or "test tube insertion to second measurement unit" is performed in Step S18. At this time, the rack transportation section 43 is controlled to transport the rack 101 by the CPU 51a, so that the container accommodating section 101b of the extracted sample container 100 reaches a position corresponding to any one of the providing position 43a of the first measurement unit 2 or the providing position 43b of the second measurement unit 3. Then, the operation is completed. In the case incapable of inserting the test tube, the execution of the corresponding operation of "test tube insertion to first measurement unit" or "test tube insertion to second measurement unit" is set as the reservation state by the CPU 51a in Step S19. Then, the process is transferred to Step S14, and the second-highest priority operation in the reservation state is searched from the operations registered in the queue. For example, when the operation of "test tube insertion to second measurement unit" is registered in the queue in the case where the operation of "test tube insertion to first measurement unit" is in the reservation state, "test tube insertion to second measurement unit" is searched.

As described above, the operation performed next time by the sample transportation device 4 is determined on the basis of the latest state of each of the first measurement unit 2 and the second measurement unit 3, immediately before the sampler transportation device 4 performs the next operation by CPU 51a. Accordingly, since the sample transportation device 4 can perform efficient transportation based on the latest state of each of the first measurement unit 2 and the second measurement unit 3, it is possible to promptly perform the process of the samples.

In the next operation determination processing state 4a shown in FIG. 13, when the next operation is performed by the above-described process of FIG. 14, the sample transportation device 4 is transited to states 4b to 4i corresponding to the operations. Specifically, the sample transportation device 4 may be transited to 9 kinds of states of a rack inputting state 4b, a test tube presence checking state 4c, a sample ID/measurement order assigning state 4d, a test tube inserting state 4e to first measurement unit, a test tube inserting state 4f to second measurement unit, a test tube extracting state 4g from first measurement unit, a test tube extracting state 4h from second measurement unit, and a rack outputting state 4i, in addition to the next operation determination processing state 4a.

In FIG. 13, the operations performed in the next operation state are shown, as "NEXT;". In FIG. 13, the events notified to the control device 5 at the time of being transited from each operation state to the next operation determination processing state 4a are shown, as "I;", and the operations registered in the queue are shown, as "C;". For example, when the sample transportation device 4 is in the rack inputting state 4b, the rack input operation shown as "NEXT; " is performed. When the sample transportation device 4 is transited from the rack inputting state 4b to the next operation determination processing state 4a, the event notification for notifying the rack input completion shown as "I;" is transmitted to the control device 5, and the test tube presence check operation shown as "C; " is registered in the queue by the CPU 51a. For the other event shown in FIG. 15, the notification is performed in the same manner as the rack input completion notification. In addition, for the other operation shown in FIG. 16, the registration to the queue is performed in the same manner as the test tube presence check operation. The two operations of "test tube extraction from first measurement unit" and "test tube extraction from second measurement unit" are registered in the queue on the basis of the test tube extraction request transmitted from the first measurement unit 2 and the second measurement unit 3.

In the case where the sample transportation device 4 is in the test tube inserting state 4e to first measurement unit, when the sample container 100 inserted to the first measurement unit 2 is transported to a predetermined position, the insertion request notification for notifying completion of transportation to a predetermined position is transmitted to the first measurement unit 2. On the basis of the notification, the CPU 51a can control the first measurement unit 2 so that the sample container 100 is gripped by the hand section 251. For the second measurement unit 3, the insertion request notification is transmitted in the same manner as the first measurement unit 2.

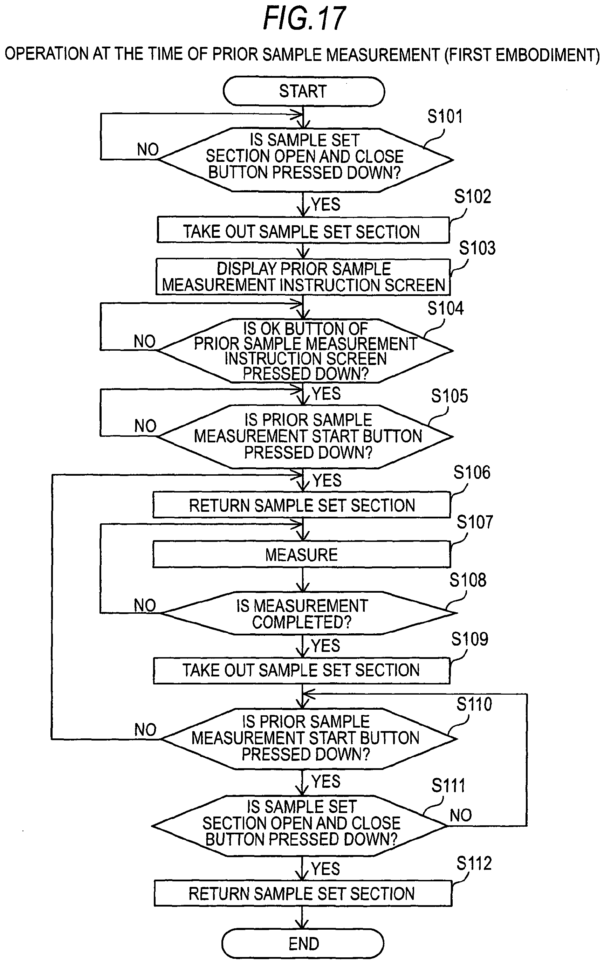

FIG. 17 is a flowchart for explaining the operation at the time of prior sample measurement of the blood analyzer according to the embodiment shown in FIG. 1. Next, the operation at the time of prior sample measurement of the blood analyzer 1 according to the embodiment will be described with reference to FIG. 1, FIG. 2, FIG. 10, and FIG. 17. In the embodiment, the first measurement unit 2 and the second measurement unit 3 can measure prior samples independently from each other, and the operations at the time of prior sample measurement in the first measurement unit 2 and the second measurement unit 3 are the same. Accordingly, the operation at the time of prior sample measurement in the first measurement unit 2 will be described herein as a representative example.

First, in Step S101 shown in FIG. 17, it is determined whether or not the sample set section open and close button 26 (see FIG. 1 and FIG. 2) is pressed down by the CPU 51a, and the determination is repeated until the sample set section open and close button 26 is pressed down. When the sample set section open and close button 26 is pressed down, the sample set section 255a (see FIG. 2) protrudes out of the insertion hole 24 in Step S102. In Step S103, the prior sample measurement instruction screen 520 (see FIG. 10) is displayed on the display unit 52. In Step S104, after a user inputs a sample identification number or sets measurement items, it is determined whether or not the OK button 520a displayed on the prior sample measurement instruction screen 520 is pressed down by the CPU 51a. The determination is continued until the OK button 520a is pressed down. When the OK button 520a is pressed down, the user sets the sample container 100 accommodating the prior sample at the sample set section 255a in Step S105 and then it is determined whether or not the prior sample measurement start button 27 (see FIG. 1 and FIG. 2) is pressed down by the CPU 51a. When the prior sample measurement start button 27 is not pressed down, the determination is repeated. When the prior sample measurement start button 27 is pressed down, the sample set section 255a is returned from the insertion hole 24 to the inside of the first measurement unit 2 in Step S106. Accordingly, the prior sample is inserted into the first measurement unit 2.

In Step S107, the measurement of the prior sample is performed. In Step S108, it is determined whether or not the measurement is completed. The determination is repeated until the measurement completed. When the measurement is completed, the sample set section 255a comes out of the insertion hole 24 in Step S109. Accordingly, the sample container 100 of the measured prior sample is discharged out of the first measurement unit 2 so as to be extracted. Then, in Step S110, it is determined whether or not the prior sample measurement start button 27 is pressed down.

The user removes the sample container 100 of the measured prior sample from the sample set section 255a, and then sets the sample container 100 accommodating a next new prior sample at the sample set section 255a. The prior sample measurement start button 27 is pressed down, thereby continuously performing the measurement of the prior sample. When the user sets the sample container 100 accommodating the next new prior sample at the sample set section 255a and presses down the prior sample measurement start button 27, the operation is transferred to Step S106 and the measurement of the next prior sample is continuously performed. In this case, even when the user does not input the sample identification number or set the measurement items, continuous identification numbers are automatically assigned by the CPU 51a and the measurement is continued with the same items according to the once set measurement items.

When the prior sample measurement start button 27 is not pressed down, it is determined whether or not the sample set section open and close button 26 is pressed down by the CPU 51a in Step Sill. The user can complete the measurement of the prior sample by pressing down the sample set section open and close button 26 . When the sample set section open and close button 26 is not pressed down, the determination is repeated until any one of the prior sample measurement start button 27 and the sample set section open and close button 26 is pressed down. When the sample set section open and close button 26 is pressed down, the sample set section 255a is returned from the insertion hole 24 to the inside of the first measurement unit 2 in Step S112 and the measurement operation of the prior sample is completed.

In the embodiment, as described above, the CPU 51a is configured to determine whether or not the samples are transportable to the selected one measurement unit on the basis of the state notification of the first measurement unit 2 and the second measurement unit 3, to control the sample transportation device 4 to perform the sample transportation operation to the selected one measurement unit when it is determined that the samples are transportable to the selected one measurement unit, and to control the sample transportation device 4 to perform the other operation than the sample transportation operation when it is determined that the sample are not transportable to the selected one measurement unit. With such a configuration, when the samples are transportable, the samples are transported to the selected one measurement unit. When the samples are not transportable, the samples are not transported to the selected one measurement unit and the other operation than the sample transportation operation is performed. Accordingly, even when interruption cause of measurement occurs such as error and a measurement instruction of a prior sample in the selected one measurement unit, the process of the samples is not interrupted. Therefore, it is possible to promptly process the samples. In the blood analyzer 1, it is not determined by the CPU 51a whether or not the rack 101 accommodating a plurality of samples can be input onto the transportation path (transportation line), but it is determined by the CPU 51a whether or not the samples are transportable to the selected one measurement unit. Accordingly, even when the interruption cause of the measurement occurs in the selected one measurement unit after the rack 101 is input onto the transportation path (transportation line), it is possible to promptly cope with the occurrence of the interruption cause. As a result, it is possible to promptly process the samples.

In the embodiment, each of the state notification of the first measurement unit 2 and the state notification of the second measurement unit 3 includes the notification indicating the transition from the sampler mode (including the sampler mode standby states 2a and 3a, and the sampler mode measuring states 2b and 3b) of measuring the samples transported by the sample transportation device 4, to the prior sample measurement mode (including the prior sample measurement mode standby states 2c and 3c, and the prior sample measurement mode measuring states 2d and 3d) of measuring the prior sample prior to the samples transported by the sample transportation device 4, thereby determining whether or not the samples are transportable to the selected one measurement unit by the CPU 51a on the basis of the notification indicating that the first measurement unit 2 or the second measurement unit 3 is transited from the transportation sample measurement mode to the prior sample measurement mode. Accordingly, when the selected one measurement unit is in the prior sample measurement mode, the sample transportation device 4 does not perform the sample transportation operation to the selected one measurement unit, and can perform the other operation than the sample transportation operation. As a result, it is possible to process the samples without waiting for cancel of the prior sample measurement mode of the selected one measurement unit. Therefore, it is possible to suppress a decrease of a process speed of the samples.

In the embodiment, the state notification of the first measurement unit 2 includes the notification indicating that the first measurement unit 2 is transited to the interruption/discontinuance occurrence state 2e, and the state notification of the second measurement unit 3 includes the notification indicating that the second measurement unit 3 is transited to the interruption/discontinuance occurrence state 3e, thereby determining whether or not the samples are transportable to the selected one measurement unit by the CPU 51a on the basis of the notification indicating that the first measurement unit 2 or the second measurement unit 3 is transited to the interruption/discontinuance occurrence state 2e or 3e. Accordingly, when the selected one measurement unit is transited to the interruption/discontinuance occurrence state 2e or 3e, the sample transportation device 4 does not perform the sample transportation operation to the selected one measurement unit, and can perform the other operation than the sample transportation operation. As a result, it is possible to process the samples without waiting until the selected one measurement unit is transited to the sampler mode standby state 2a or 3a or is transited to the prior sample measurement mode standby state 2c or 3c. Therefore, it is possible to suppress a decrease of a process speed of the samples.

All the above-described embodiments are only examples, and it should be considered that they are not restrictive examples. The scope of the invention is not limited to the description of the embodiments, but is limited only by Claims.

For example, in the embodiment, the blood analyzer has been described as an example of an analyzer, but the invention is not limited thereto. The invention may be applied to the other analyzer as long as it is an analyzer provided with a plurality of measurement units.

In the embodiment, the blood analyzer is provided with two measurement units of the first measurement unit and the second measurement unit by way of example, but the invention is not limited thereto. The blood analyzer may be provided with three or more measurement units.

In the embodiment, the sample container is taken out of the rack and is input into the measurement unit by way of example, but the invention is not limited thereto. The samples may be sucked from the sample container accommodated in the rack by the sample suction section, the sample container may not be input into the measurement unit, and only the sample may be input.

In the embodiment, the control device is provided with one control unit by way of example, but the invention is not limited thereto. The first measurement unit and the second measurement unit may be provided with different control units, respectively. Theses control units may be mounted on the first measurement unit and the second measurement units, respectively.

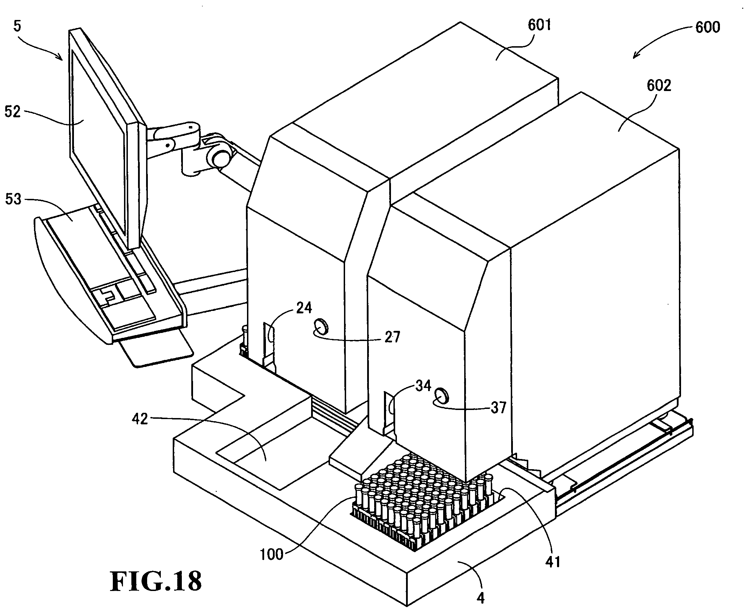

In the embodiment, the first measurement unit and the second measurement unit are accommodated in the independent different housings, respectively, by way of example (see FIG. 1 and FIG. 2), but the invention is not limited thereto. As shown in FIG. 18, the first measurement unit and the second measurement unit may be accommodated together in one housing 7.

In the embodiment, the first measurement unit and the second measurement unit are substantially the same type of measurement units by way of example, but the invention is not limited thereto. The first measurement unit and the second measurement unit may be different types of measurement units.

## Claims

1. An analyzer (1) comprising:
a first measurement unit (2);
a second measurement unit (3);
a transportation device (4) for transporting samples in a rack to at least one measurement unit selected from the first measurement unit and the second measurement unit, wherein the transportation device (4) comprises a transportation line (43) and is configured to transport samples in a rack in both directions including from the first measurement unit (2) to the second measurement unit (3) and from the second measurement unit (3) to the first measurement unit (3) on the transportation line (43); and
a transportation controller (51a) for determining whether or not one of the samples is transportable to the selected one measurement unit on the basis of at least one of a state notification of the first measurement unit (2) and a state notification of the second measurement unit (3), wherein the transportation controller (51a) controls the transportation device (4) to transport the sample to the first measurement unit when the sample is transportable to the first measurement unit, and to transport the sample to the second measurement unit when the sample is not transportable to the first measurement unit.

2. The analyzer according to Claim 1, wherein each of the state notification of the first measurement unit (2) and the state notification of the second measurement unit (3) comprises notification of a transition from a transportation measurement mode of measuring samples transported by the transportation device (4) to a prior sample measurement mode of measuring a prior sample prior to the samples transported by the transportation device (4).

3. The analyzer (1) according to Claim 1 or 2, wherein the state notification of the first measurement unit (2) comprises occurrence of error in the first measurement unit (2), and the state notification of the second measurement unit (3) comprises occurrence of error in the second measurement unit (3).

4. The analyzer (1) according to any one of Claims 1 to 3, wherein transporting the sample to the first measurement unit performed by the transportation device (4) comprises transporting the sample to a sample providing position (43a) where the sample is provided to the measurement unit, and waiting for the transported sample to be inserted to the first measurement unit.

5. The analyzer according to Claim 1, wherein transporting the sample to the second measurement unit comprises transporting the sample to a second sample providing position (43b) where the sample is provided to the second measurement unit, and waiting for the transported sample to be inserted to the second measurement unit.

6. The analyzer (1) according to any one of Claims 1 to 5, wherein transporting the sample to the second measurement unit performed by the transportation device (4) comprises at least one of transporting the sample to a sample presence check position (43c) for checking whether or not there is a sample container for containing a sample, and transporting the sample to a reading position (43d) for reading an identifier attached to the sample container for containing a sample.

7. The analyzer (1) according to any one of Claims 1 to 6, further comprising a memory (51c) for storing the next operation to be performed by the transportation device,
wherein the transportation controller (51a) controls the transportation device (4) on the basis of the next operation stored in the memory.

8. The analyzer (1) according to Claim 7, wherein the transportation controller (51a) determines whether or not the sample is transportable to the selected one measurement unit when the next operation to be performed by the transportation device (4) stored in the memory (51c) is a sample transportation operation.

9. The analyzer (1) according to Claim 7 or 8, wherein when a plurality of operations are stored in the memory (51a) as the next operation to be performed by the transportation device (4), the transportation controller (51a) selects one operation from the plurality of operations in accordance with a predetermined priority and controls the transportation device (4) on the basis of the selected one operation.

10. The analyzer (1) according to any one of Claims 1 to 9, wherein the transportation controller (51a) monitors the state notification of the first measurement unit (2) and the state notification of the second measurement unit (3), and determines whether or not the sample is transportable to the selected one measurement unit on the basis of the monitoring result.

11. A sample transportation method for an analyzer (1), the method comprising:
transporting samples on a rack on a transportation line (43) configured to transport samples in a rack in both directions including from a first measurement unit (2) to a second measurement unit (3) and from the second measurement unit (3) to the first measurement unit (3) on the transportation line (43);
determining whether or not one of the samples in a rack is transportable to selected one measurement unit on the basis of at least one of a state notification of the first measurement unit (2) and a state notification of the second measurement unit (3);
transporting the sample to the first measurement unit when the sample is transportable to the first measurement unit; and
transporting the sample to the second measurement unit when the sample is not transportable to the first measurement unit.

12. The sample transportation method according to Claim 11, wherein each of the state notification of the first measurement unit and the state notification of the second measurement unit comprises notification of a transition from a transportation measurement mode of measuring samples transported by a transportation device to a prior sample measurement mode of measuring a prior sample prior to the samples transported by the transportation device.

13. The sample transportation method according to Claim 11 or 12, wherein the state notification of the first measurement unit (2) comprises occurrence of error in the first measurement unit (2), and the state notification of the second measurement unit (3) comprises occurrence of error in the second measurement unit (3).

## Patentansprüche

1. Analysiergerät (1), umfassend:
eine erste Messeinheit (2);
eine zweite Messeinheit (3);
eine Transportvorrichtung (4) zum Transportieren von Proben in einem Gestell zu mindestens einer Messeinheit, ausgewählt aus der ersten Messeinheit und der zweiten Messeinheit, wobei die Transportvorrichtung (4) eine Transportlinie (43) umfasst und konfiguriert ist, um Proben in einem Gestell auf der Transportlinie (43) in beide Richtungen zu transportieren, einschließlich von der ersten Messeinheit (2) zu der zweiten Messeinheit (3) und von der zweiten Messeinheit (3) zu der ersten Messeinheit (3); und
eine Transportsteuerung (51a) zum Bestimmen auf der Grundlage von mindestens einem von einer Zustandsbenachrichtigung der ersten Messeinheit (2) und einer Zustandsbenachrichtigung der zweiten Messeinheit (3), ob eine der Proben zu der ausgewählten einen Messeinheit transportierbar ist oder nicht, wobei die Transportsteuerung (51a) die Transportvorrichtung (4) steuert, um die Probe zu der ersten Messeinheit zu transportieren, wenn die Probe zu der ersten Messeinheit transportierbar ist, und die Probe zu der zweiten Messeinheit zu transportieren, wenn die Probe nicht zu der ersten Messeinheit transportierbar ist.

2. Analysiergerät nach Anspruch 1, wobei jede von der Zustandsbenachrichtigung der ersten Messeinheit (2) und der Zustandsbenachrichtigung der zweiten Messeinheit (3) Benachrichtigung eines Übergangs von einem Transportmessmodus des Messens von durch die Transportvorrichtung (4) transportierten Proben zu einem vorherigen Probenmessmodus des Messens einer vorherigen Probe vor den durch die Transportvorrichtung (4) transportierten Proben umfasst.

3. Analysiergerät (1) nach Anspruch 1 oder 2, wobei die Zustandsbenachrichtigung der ersten Messeinheit (2) Auftreten von Fehler in der ersten Messeinheit (2) umfasst und die Zustandsbenachrichtigung der zweiten Messeinheit (3) Auftreten von Fehler in der zweiten Messeinheit (3) umfasst.

4. Analysiergerät (1) nach einem von Ansprüchen 1 bis 3, wobei Transportieren der Probe zu der ersten Messeinheit, durchgeführt von der Transportvorrichtung (4), Transportieren der Probe zu einer Probenbereitstellungsposition (43a), wo die Probe der Messeinheit bereitgestellt wird, und darauf Warten, dass die transportierte Probe in die erste Messeinheit eingeführt wird, umfasst.

5. Analysiergerät nach Anspruch 1, wobei Transportieren der Probe zu der zweiten Messeinheit Transportieren der Probe zu einer zweiten Probenbereitstellungsposition (43b), wo die Probe der zweiten Messeinheit bereitgestellt wird, und darauf Warten, dass die transportierte Probe in die zweite Messeinheit eingeführt wird, umfasst.

6. Analysiergerät (1) nach einem der Ansprüche 1 bis 5, wobei Transportieren der Probe zu der zweiten Messeinheit, durchgeführt von der Transportvorrichtung (4), mindestens eins von Transportieren der Probe zu einer Probengegenwart-Überprüfposition (43c) zum Überprüfen, ob es einen Probenbehälter zum Enthalten einer Probe gibt oder nicht, und Transportieren der Probe zu einer Leseposition (43d) zum Lesen eines an dem Probenbehälter zum Enthalten einer Probe befestigten Identifikators umfasst.

7. Analysiergerät (1) nach einem der Ansprüche 1 bis 6, weiter umfassend einen Speicher (51c) zum Speichern des nächsten durch die Transportvorrichtung durchzuführenden Vorgangs,
wobei die Transportsteuerung (51a) die Transportvorrichtung (4) auf der Grundlage des in dem Speicher gespeicherten nächsten Vorgangs steuert.

8. Analysiergerät (1) nach Anspruch 7, wobei die Transportsteuerung (51a) bestimmt, ob die Probe zu der einen ausgewählten Messeinheit transportierbar ist oder nicht, wenn der nächste in dem Speicher (51c) gespeicherte von der Transportvorrichtung (4) durchzuführende Vorgang ein Probentransportvorgang ist.

9. Analysiergerät (1) nach Anspruch 7 oder 8, wobei, wenn eine Vielzahl von Vorgängen als der nächster von der Transportvorrichtung (4) durchzuführender Vorgang in dem Speicher (51a) gespeichert sind, die Transportsteuerung (51a) einen Vorgang aus der Vielzahl von Vorgängen in Übereinstimmung mit einer vorher festgelegten Priorität auswählt und die Transportvorrichtung (4) auf der Grundlage des ausgewählten einen Vorgangs steuert.

10. Analysiergerät (1) nach einem der Ansprüche 1 bis 9, wobei die Transportsteuerung (51a) die Zustandsbenachrichtigung der ersten Messeinheit (2) und die Zustandsbenachrichtigung der zweiten Messeinheit (3) überwacht und auf Grundlage des Überwachungsresultats bestimmt, ob die Probe zu der ausgewählten einen Messeinheit transportierbar ist oder nicht.

11. Probentransportverfahren für ein Analysiergerät (1), wobei das Verfahren umfasst:
Transportieren von Proben auf einem Gestell auf einer Transportlinie (43), konfiguriert, um Proben in einem Gestell auf der Transportlinie (43) in beide Richtungen zu transportieren, einschließlich von einer ersten Messeinheit (2) zu einer zweiten Messeinheit (3) und von der zweiten Messeinheit (3) zu der ersten Messeinheit (3);
Bestimmen, auf der Grundlage von mindestens einem von einer Zustandsbenachrichtigung der ersten Messeinheit (2) und einer Zustandsbenachrichtigung der zweiten Messeinheit (3), ob eine der Proben in einem Gestell zu ausgewählter einen Messeinheit transportierbar ist oder nicht;
Transportieren der Probe zu der ersten Messeinheit, wenn die Probe zu der ersten Messeinheit transportierbar ist; und
Transportieren der Probe zu der zweiten Messeinheit, wenn die Probe nicht zu der ersten Messeinheit transportierbar ist.

12. Probentransportverfahren nach Anspruch 11, wobei jede von der Zustandsbenachrichtigung der ersten Messeinheit und der Zustandsbenachrichtigung der zweiten Messeinheit Benachrichtigung eines Übergangs von einem Transportmessmodus des Messens von durch eine Transportvorrichtung transportierten Proben zu einem vorherigen Probenmessmodus des Messens einer vorherigen Probe vor den durch die Transportvorrichtung transportierten Proben umfasst.

13. Probentransportverfahren nach Anspruch 11 oder 12, wobei die Zustandsbenachrichtigung der ersten Messeinheit (2) Auftreten von Fehler in der ersten Messeinheit (2) umfasst und die Zustandsbenachrichtigung der zweiten Messeinheit (3) Auftreten von Fehler in der zweiten Messeinheit (3) umfasst.

## Revendications

1. Analyseur (1) comprenant:
une première unité de mesure (2) ;
une seconde unité de mesure (3) ;
un dispositif de transport (4) pour transporter des échantillons dans un râtelier vers au moins une unité de mesure sélectionnée parmi la première unité de mesure et la seconde unité de mesure, dans lequel le dispositif de transport (4) comprend une ligne de transport (43) et est configuré pour transporter des échantillons dans un râtelier dans deux directions incluant de la première unité de mesure (2) vers la seconde unité de mesure (3) et de la seconde unité de mesure (3) vers la première unité de mesure (3) sur la ligne de transport (43) ; et
un dispositif de commande de transport (51a) pour déterminer si un des échantillons peut ou non être transporté vers l'unité de mesure sélectionnée sur la base d'au moins l'une parmi une notification d'état de la première unité de mesure (2) et une notification d'état de la seconde unité de mesure (3), dans lequel le dispositif de commande de transport (51a) commande le dispositif de transport (4) pour transporter l'échantillon vers la première unité de mesure quand l'échantillon peut être transporté vers la première unité de mesure, et pour transporter l'échantillon vers la seconde unité de mesure quand l'échantillon ne peut pas être transporté vers la première unité de mesure.

2. Analyseur selon la revendication 1, dans lequel chacune parmi la notification d'état de la première unité de mesure (2) et la notification d'état de la seconde unité de mesure (3) comprend la notification d'une transition d'un mode de mesure de transport consistant à mesurer des échantillons transportés par le dispositif de transport (4) à un mode de mesure d'échantillon précédent consistant à mesurer un échantillon précédent avant les échantillons transportés par le dispositif de transport (4).

3. Analyseur (1) selon la revendication 1 ou 2, dans lequel la notification d'état de la première unité de mesure (2) comprend l'apparition d'une erreur dans la première unité de mesure (2), et la notification d'état de la seconde unité de mesure (3) comprend l'apparition d'une erreur dans la seconde unité de mesure (3).

4. Analyseur (1) selon l'une quelconque des revendications 1 à 3, dans lequel le transport de l'échantillon vers la première unité de mesure effectué par le dispositif de transport (4) comprend le transport de l'échantillon vers une position de fourniture d'échantillon (43a) où l'échantillon est fourni à l'unité de mesure, et l'attente que l'échantillon transporté soit inséré dans la première unité de mesure.

5. Analyseur selon la revendication 1, dans lequel le transport de l'échantillon vers la seconde unité de mesure comprend le transport de l'échantillon vers une seconde position de fourniture d'échantillon (43b) où l'échantillon est fourni à la seconde unité de mesure, et l'attente que l'échantillon transporté soit inséré dans la seconde unité de mesure.

6. Analyseur (1) selon l'une quelconque des revendications 1 à 5, dans lequel le transport de l'échantillon vers la seconde unité de mesure effectué par le dispositif de transport (4) comprend au moins un parmi le transport de l'échantillon vers une position de vérification de présence d'échantillon (43c) pour vérifier s'il y a ou non est un récipient pour échantillon pour contenir un échantillon, et le transport de l'échantillon vers une position de lecture (43d) pour lire un identifiant fixé au récipient pour échantillon pour contenir un échantillon.

7. Analyseur (1) selon l'une quelconque des revendications 1 à 6, comprenant en outre une mémoire (51c) pour stocker l'opération suivante à effectuer par le dispositif de transport,
dans lequel le dispositif de commande de transport (51a) commande le dispositif de transport (4) sur la base de l'opération suivante stockée dans la mémoire.

8. Analyseur (1) selon la revendication 7, dans lequel le dispositif de commande de transport (51a) détermine si l'échantillon peut ou non être transporté vers l'unité de mesure sélectionnée quand l'opération suivante à effectuer par le dispositif de transport (4) stockée dans la mémoire (51c) est une opération de transport d'échantillon.

9. Analyseur (1) selon la revendication 7 ou 8, dans lequel quand une pluralité d'opérations sont stockées dans la mémoire (51a) en tant qu'opération suivante à effectuer par le dispositif de transport (4), le dispositif de commande de transport (51a) sélectionne une opération parmi la pluralité d'opérations conformément à une priorité prédéterminée et commande le dispositif de transport (4) sur la base de l'opération sélectionnée.

10. Analyseur (1) selon l'une quelconque des revendications 1 à 9, dans lequel le dispositif de commande de transport (51a) surveille la notification d'état de la première unité de mesure (2) et la notification d'état de la seconde unité de mesure (3), et détermine si l'échantillon peut ou non être transporté vers l'unité de mesure sélectionnée sur la base du résultat de surveillance.

11. Procédé de transport d'échantillon pour un analyseur (1), le procédé comprenant les étapes consistant à :
transporter des échantillons sur un râtelier sur une ligne de transport (43) configurée pour transporter des échantillons dans un râtelier dans deux directions incluant d'une première unité de mesure (2) vers une seconde unité de mesure (3) et de la seconde unité de mesure (3) vers la première unité de mesure (3) sur la ligne de transport (43) ;
déterminer si un des échantillons dans un râtelier peut ou non être transporté vers l'unité de mesure sélectionnée sur la base d'au moins l'une parmi une notification d'état de la première unité de mesure (2) et une notification d'état de la seconde unité de mesure (3) ;
transporter l'échantillon vers la première unité de mesure quand l'échantillon peut être transporté vers la première unité de mesure ; et
transporter l'échantillon vers la seconde unité de mesure quand l'échantillon ne peut pas être transporté vers la première unité de mesure.

12. Procédé de transport d'échantillon selon la revendication 11, dans lequel chacune parmi la notification d'état de la première unité de mesure et la notification d'état de la seconde unité de mesure comprend la notification d'une transition d'un mode de mesure de transport consistant à mesurer des échantillons transportés par un dispositif de transport à un mode de mesure d'échantillon précédent consistant à mesurer un échantillon précédent avant les échantillons transportés par le dispositif de transport.

13. Procédé de transport d'échantillon selon la revendication 11 ou 12, dans lequel la notification d'état de la première unité de mesure (2) comprend l'apparition d'une erreur dans la première unité de mesure (2), et la notification d'état de la seconde unité de mesure (3) comprend l'apparition d'une erreur dans la seconde unité de mesure (3).
